(19)

Europäisches
Patentamt
European
Patent Office
Office européen
des brevets

(11) **EP 1 619 807 B1**

(12) **EUROPEAN PATENT SPECIFICATION**

(45) Date of publication and mention
of the grant of the patent:
**11.04.2007 Bulletin 2007/15**

(51) Int Cl.:
***H04B 1/707*** (2006.01)

(21) Application number: **05015662.9**

(22) Date of filing: **19.07.2005**

(54) **Chip equalizer for spread spectrum receiver**

Chip-Entzerrer für einen Spreizspektrum-Empfänger

Egaliseur chip pour un récepteur à sprectre etalé

(84) Designated Contracting States:
**DE FR GB IT**

(30) Priority: **20.07.2004 AU 2004904006**
**06.07.2005 AU 2005203016**

(43) Date of publication of application:
**25.01.2006 Bulletin 2006/04**

(73) Proprietor: **NEC CORPORATION**
**Tokyo (JP)**

(72) Inventor: **Bui, Thanh Ngoc**
**Victoria (AU)**

(74) Representative: **Glawe, Delfs, Moll**
**Patentanwälte**
**Postfach 26 01 62**
**80058 München (DE)**

(56) References cited:
- **JIANZHONG ZHAN ET AL INSTITUTE OF ELECTRICAL AND ELECTRONICS ENGINEERS: "Efficient linear equalization for high data rate downlink CDMA signaling" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 November 2003 (2003-11-09), pages 141-145, XP010701443 ISBN: 0-7803-8104-1**
- **SHAHID U. H. QURESHI: "Adaptive Equalization" PROCEEDINGS OF THE IEEE, vol. 73, no. 9, September 1985 (1985-09), pages 1349-1387, XP002353002**
- **BERNARDINI A ET AL: "One-shot Digital Equalization For Nonlinear Modulations" CONFERENCE PROCEEDINGS ARTICLE, 19 March 1992 (1992-03-19), pages 252-263, XP010322100**
- **MAILAENDER L: "Linear MIMO chip equalization for the CDMA downlink" SIGNAL PROCESSING ADVANCES IN WIRELESS COMMUNICATIONS, 2003. SPAWC 2003. 4TH IEEE WORKSHOP ON ROME, ITALY 15-18 JUNE 2003, PISCATAWAY, NJ, USA,IEEE, US, 15 June 2003 (2003-06-15), pages 299-303, XP010713482 ISBN: 0-7803-7858-X**

**Description**

BACKGROUND OF THE INVENTION

Field of the Invention

The present invention relates generally to spread spectrum receivers, and in particular to methods of optimizing the equalization of a spread spectrum signal transmitted through multiple resolvable fading paths channel. The present invention is suitable for use in applications involving W-CDMA transmission techniques, and it will be convenient to describe the invention in relation to that exemplary application.

Description of the Related Art

In W-CDMA communication systems, multi code signals at the transmitter are orthogonal to each other. However, this orthogonality is lost as the signals propagate through a multipath fading channel. A chip equalizer is employed in the W-CDMA receiver as a means to restore the orthogonality of the signal, and thereby improve the receiver performance.

Typically, chip equalizers are implemented as a Finite Impulse Response (FIR) filter. The chip equalizer tries to compensate for the multipath interference by inverting the channel. A known method for computing optimal chip equalizer filter coefficients using a direct inversion matrix method involves estimation of the matrix G from the expression $G = H^H H + \beta I$, where $H^H H$ is the channel correlation matrix, I is the identity matrix, and $\beta$ is the scalar noise factor in a W-CDMA system.

The method for channel estimation to obtain the channel correlation matrix is usually straightforward, and the matrix can be estimated based on the common pilot signal in W-CDMA systems. However, to date there has been limited or no consideration of a optimal method of computing an estimate of the scalar noise factor in the W-CDMA system. A chip equalizer that only uses knowledge of channel estimation and does not take into account noise variance results in sub optimal performance compared to a receiver that takes both factors into account.

A method for computing a parameter representative of channel noise according to the preamble part of claim 1 is known from JIANZHONG ZHAN ET AL, INSTITUTE OF ELECTRICAL AND ELECTRONICS ENGINEERS: "Efficient linear equalization for high data rate downlink CDMA signaling" CONFERENCE RECORD OF THE 37TH ASILOMAR CONFERENCE ON SIGNALS, SYSTEMS, & COMPUTERS. PACIFIC GROOVE, CA, NOVEMBER 9 - 12, 2003, ASILOMAR CONFERENCE ON SIGNALS, SYSTEMS AND COMPUTERS, NEW YORK, NY: IEEE, US, vol. VOL. 1 OF 2. CONF. 37, November 9, 2003 (2003-11-09), pages 141-145, XP010701443, ISBN: 0-7803-8104-1.

SUMMARY OF THE INVENTION

It is an object of the present invention to provide a method of equalizing the received chip signal distorted by multiple paths that ameliorates or overcomes one or more disadvantages of the prior art.

It is another object of the present invention to provide a method of noise factor computation for a chip equalizer in a spread spectrum receiver that optimized the equalization of the received chip signal.

It is still another object of the present invention to provide a method of noise factor computation for a chip equalizer in a spread spectrum receiver that was simple and practical to implement.

These objects are solved by the features of claim 1.

Advantageous embodiments are mentioned in the subclaims.

BRIEF DESCRIPTION OF THE DRAWINGS

The above and other objects, advantages, and features of the present invention will be more apparent from the following description taken in conjunction with the accompanying drawings in which:

Fig. 1 is a schematic diagram of a spread spectrum receiver according to a preferable embodiment of the present invention; and

Fig. 2 is a schematic diagram of a chip equalizer forming part of a despreader block making up the spread spectrum receiver shown in Fig. 1.

DETAILED DESCRIPTION OF THE PREFERRED EMBODIMENTS

The following description refers in more detail to the various features of the invention. In order to facilitate an understanding of the invention, reference is made in the description to the accompanying drawings where the method of noise factor computation for a chip equalizer in a spread spectrum receiver is illustrated in a preferred embodiment. It is to be understood however that the invention is not limited to the preferred embodiment illustrated in the drawings.

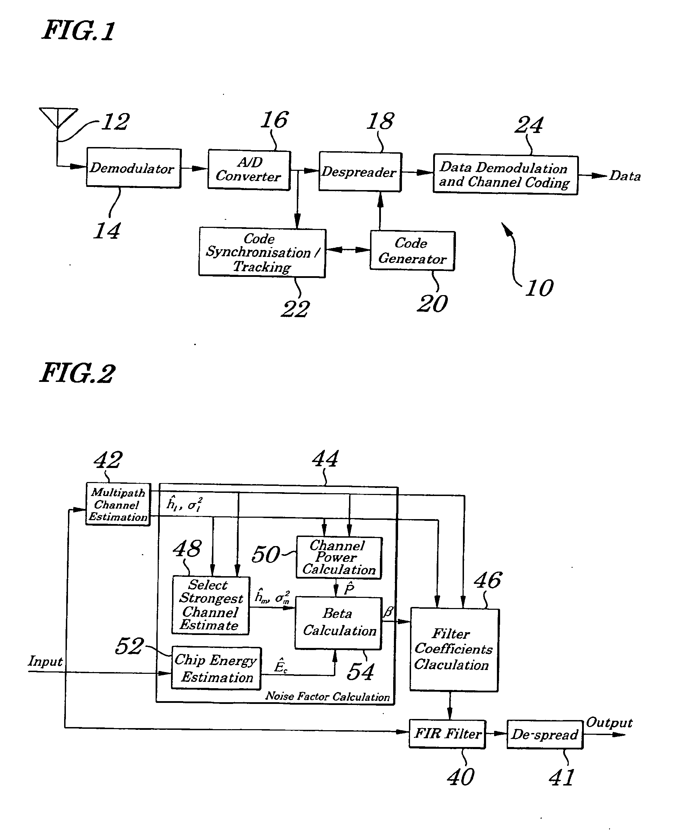

Referring now to Fig. 1, there is shown generally a spread spectrum receiver 10 including an antenna 12 for receiving spread spectrum signals, a demodulator 14 for demodulating the spread spectrum signals received at the antenna 12, and an analogue to digital converter 16 for digitizing the demodulated signals. The spread spectrum receiver 10 uses coherent demodulation to despread the demodulated signal using a locally generated code sequence from a code generator 20 in conjunction with a despreader 18. To be able to perform the despreading operation, the spread spectrum receiver 10 must not only know the channelization code sequence used to spread the signal, but the codes of the received signal and the locally generated code must be synchronized. The code synchronization/tracking block 22 performs this operation. After despreading, data symbols are demodulated and the channel decoded in a data modulation and channel coding block 24 to obtain information data.

The despreader block 18 in a conventional rake receiver consists of a number of de-spread blocks, each for receiving a different multipath signal. In each finger, the received signal is correlated by a spreading code, which is time aligned with the delay of the multipath signal. For each multipath, the despreaded signal is then multiplied (weighted) with the complex conjugate of the channel estimate and coherently summed by a RAKE combiner to form the output signal.

Figure 2 shows despreader block 18 where the chip equalization function is performed and various computational blocks of the despreader block 18. The main function of the chip equalizer is to estimate coefficients for use by FIR filter 40 to filter the input signal and restore the orthogonality of the multicode signals. The output data of one code signal is then sent to de-spread block 41. In case of multicode signal reception, the output of FIR filter 40 is fed to multiple de-spread blocks 41 to form output data of multicode accordingly. To estimate the FIR filter coefficients, a multipath channel estimation block 42, a noise factor calculation block 44 and a coefficients calculation block 46 are needed.

The multipath channel estimation block 42 acts to compute channel and noise variance estimates for multiple resolvable fading paths of chip signals received at the spread spectrum receiver. The block 42 derives a channel estimate $\hat{h}_l$ of $l$-th fading path by averaging a number of despreaded pilot symbols of that path according to expression (5):

$$\hat{h}_l = \frac{1}{K} \times \sum_K p(k)^* \times y_l(k) \qquad (5)$$

where $p(k)^*$ is the complex conjugate of a pilot symbol and $|p(k)|=1$, $K$ is the number of pilot symbols used for estimation, $y_l(k)$ is despread pilot symbol of $l$-th path.

The unbiased estimate of noise variance $\hat{\sigma}_l^2$ at the output of $l$-th despreader is computed by the multipath estimation block 42 according to expression (6):

$$\hat{\sigma}_l^2 \approx \frac{K}{K-1}\left(\frac{1}{K}\sum_K |y_l(k)|^2 - |\hat{h}_l|^2\right) \qquad (6)$$

The noise factor calculation block 44 includes a strongest channel estimator block 48, a channel power calculation block 50, a chip energy estimation block 52 and a scalar noise factor calculation block 54. To estimate the scalar noise factor β based on statistics of $l$-th path, the following considerations have been taken into account in the design of the chip equalizers. Firstly, the average received chip energy $E_{chip}$ can be obtained from expression (7):

$$E_{chip} = E\left[|r(m)|^2\right] \approx \frac{1}{M}\sum_M |r(m)|^2 \qquad (7)$$

where $M$ is number of chips used in estimation and $r(m)$ is a chip.

Secondly, the sum $\hat{P}$ of power of channel estimates and the index $m$ of the fading path with strongest channel estimate power can be calculated from expressions (8) and (9):

$$\hat{P} = \sum_{l=1}^{L} \left| \hat{h}_l \right|^2 \qquad (8)$$

$$m = \arg \left[ \max \left\{ \left| \hat{h}_l \right|^2 \right\} \right] \qquad (9)$$

where $\hat{h}_l$ is the channel estimate of $l$-th fading path.

Finally, the noise factor estimate $\hat{\beta}$ can be estimated by using expression (10):

$$\hat{\beta} = \frac{\hat{E}_{chip} \, | \, \hat{h}_m \, |^2}{\hat{E}_{chip} - SF \hat{\sigma}_m^2} - \hat{P} \qquad (10)$$

where $SF$ is the of the spreading factor of the pilot signal received at the spread spectrum receiver.

Accordingly, the multipath channel estimation block 42 of the chip equalizer computes a channel estimate $\hat{h}_l$, and a noise variance estimate $\hat{\sigma}_l^2$ according to above-referenced expressions 5 and 6. The channel estimates and noise variance estimates for each of the multiple resolvable fading paths of chip signals are provided to the channel power calculation block 50, where the sum $\hat{P}$ of power of the channel estimates is readily obtained from the channel estimates $\hat{h}_l$. The sum of power of channel estimates is then provided to the beta calculation block 54. The chip energy estimation block 52 derives the estimated chip energy $\hat{E}_{chip}$ from the input I/Q chip samples in accordance with expression 7.

It is preferable that the noise factor is computed by selecting the channel and noise variance estimates from the fading path having the greatest power. In this regard, the strongest channel estimate block 48 acts to derive the channel and noise variance estimates $\hat{h}_m$ and $\sigma_m^2$ from the fading path having the greatest power.

The channel $\hat{h}_{nl}$ and noise variance $\sigma_m^2$ estimates are then provided to the scalar noise factor calculation block 54, which then uses the chip energy estimate, channel and noise variance estimate of the strongest fading path, the sum of the power of the channel estimates and the spreading factor of the pilot signal to derive an estimate of the noise factor for use in calculating the filter coefficients.

In the filter coefficients calculation block 46, the gain matrix G = $H^H$H+ β I is constructed in order to calculate the filter coefficients of the FIR filter 40, where $H^H$H is the channel correlation matrix, I is the identity matrix, and β is the scalar noise factor in a W-CDMA system.

The various computational blocks of the chip equalizer shown in Figure 2, as well as other elements of the spread spectrum receiver shown in Figure 1, may be realized using digital signal processing techniques.

**Claims**

1.  A method of computing (54) a parameter representative of channel noise in equalization algorithms for use in a chip equalizer making up a spread spectrum receiver (10), the method comprising the steps of:

    computing (42) channel and noise variance estimates for multiple resolvable fading paths of chip signals received at said spread spectrum receiver (10);
    computing (50) a sum of power of the channel estimates;
    estimating (52) chip energy of the chip signals; and
    computing (54) the parameter representative of the channel noise from the chip energy estimate, the channel and noise variance estimates, the sum of power of the channel estimates, and a spreading factor of a pilot signal,

    **characterized in that** the step of computing (54) the parameter representative of the channel noise is carried out by selecting the channel and noise variance estimates from the fading path having greatest power.

2. The method according to claim 1, wherein the step of computing (42) the channel and noise variance estimates is carried out by using a despread pilot signal corresponding to each fading path.

3. The method according to claim 1, wherein the step of computing (50) the sum $\hat{P}$ of power of the channel estimates is carried out in accordance with expression (1):

$$\hat{P} = \sum_{l=1}^{L} \left| \hat{h}_l \right|^2 \qquad (1)$$

where $\hat{h}_l$ is the channel estimate of $l$-th fading path.

4. The method according to claim 1, wherein the step of selecting the channel $\hat{h}_m$ and noise variance $\sigma_m^2$ estimates from the fading path having the greatest power is carried out in accordance with expression (2) :

$$m = \arg\left[ \max\left\{ \left| \hat{h}_l \right|^2 \right\} \right] \qquad (2)$$

where $m$ is an index of the fading path having the greatest power and $\hat{h}_l$ is the channel estimate of the $l$-th fading path.

5. The method according to claim 4, wherein the step of computing (54) the parameter $\beta$ representative of the channel noise is carried out in accordance with expression (3) :

$$\beta = \frac{\hat{E}_c \left| \hat{h}_m \right|^2}{\hat{E}_c - SF\sigma_m^2} - \hat{P} \qquad (3)$$

where $\hat{E}_c$ is the estimated chip energy of the chip signals, $\hat{h}_m$ is the channel estimate of the fading path having the strongest power,

$\sigma_m^2$ is the noise variance estimate of the fading path having the strongest power, SF is the spreading factor of the pilot signal received at said spread spectrum receiver (10) and $\hat{P}$ is sum of power of the channel estimates.

6. A method of determining filter coefficients for use in a chip equalizer FIR (Finite Impulse Response) filter making up a spread spectrum receiver (10), the method **characterized by** comprising:

computing (54) the parameter representative of the channel noise using the method according to any one of claims 1 to 5;
constructing a matrix G according to expression (4):

$$G = H^H H + \beta I \qquad (4)$$

where $\mathbf{H}^H\mathbf{H}$ is a channel correlation matrix, $\mathbf{I}$ is the identity matrix, and $\beta$ is a scalar parameter representative of the channel noise; and

calculating (46) the filter coefficients based on the matrix G.

7. A chip equalizer for use in a spread spectrum receiver (10), comprising one or more computational blocks for implementing a method according to any one of claims 1 to 5.

**Patentansprüche**

1. Verfahren zum Berechnen (54) eines Parameters, der ein Kanalrauschen repräsentiert, in Entzerrungsalgorithmen zur Verwendung in einem Chip-Entzerrer, der einen Spreizspektrumempfänger (10) bildet, wobei das Verfahren die Schritte aufweist:

Berechnen (42) von Kanal- und Rauschvarianzschätzwerten für mehrfach auflösbare Schwundstrecken von Chip-Signalen, die an dem Spreizspektrumempfänger (10) empfangen werden;
Berechnen (50) der Summe der Leistung der Kanalschätzwerte;
Schätzen (52) der Chip-Energie der Chip-Signale; und
Berechnen (54) des Parameters, der das Kanalrauschen repräsentiert, aus dem Chip-Energieschätzwert, den Kanal- und Rauschvarianzschätzwerten, der Summe der Leistung der Kanalschätzwerte, und einem Spreizfaktor eines Pilotsignals,

*dadurch gekennzeichnet,* **dass** der Schritt Berechnen (54) des für das Kanalrauschen repräsentativen Parameters **dadurch** ausgeführt wird, dass die Kanal- und Rauschvarianzschätzwerte aus der Schwundstrecke mit der größten Leistung gewählt werden.

2. Verfahren nach Anspruch 1, wobei der Schritt Berechnen (42) der Kanal- und Rauschvarianzschätzwerte durchgeführt wird, indem ein Despread-Pilotsignal entsprechend jeder Schwundstrecke verwendet wird.

3. Verfahren nach Anspruch 1, wobei der Schritt Berechnen (50) der Summe $\hat{P}$ der Leistung der Kanalschätzwerte gemäß der Gleichung (1) durchgeführt wird:

$$\hat{P} = \sum_{l=1}^{L}\left|\hat{h}_l\right|^2 \qquad\qquad (1)$$

wobei $\hat{h}_l$ der Kanalschätzwert der $l$-ten Schwundstrecke ist.

4. Verfahren nach Anspruch 1, wobei der Schritt des Wählens der Schätzwerte des Kanals $\hat{h}_m$ und der Rauschvarianz $\sigma_m^2$ aus der Schwundstrecke mit der größten Leistung gemäß der Gleichung (2) durchgeführt wird:

$$m = \arg\left[\max\left\{\left|\hat{h}_l\right|^2\right\}\right] \qquad\qquad (2)$$

wobei $m$ ein Index der Schwundstrecke mit der größten Leistung ist und $\hat{h}_l$ der Kanalschätzwert der $l$-ten Schwundstrecke ist.

5. Verfahren nach Anspruch 4, wobei der Schritt Berechnen (54) des für das Kanalrauschen repräsentativen Parameters $\beta$ in Übereinstimmung mit der Gleichung (3) durchgeführt wird:

$$\beta = \frac{\hat{E}_c \left| \hat{h}_m \right|^2}{\hat{E}_c - SF\sigma_m^2} - \hat{P} \qquad (3)$$

wobei $\hat{E}_c$ die geschätzte Chip-Energie der Chip-Signale ist, $\hat{h}_m$ der Kanalschätzwert der Schwundstrecke mit der stärksten Leistung ist,

$\sigma_m^2$ der Rauschvarianzschätzwert der Schwundstrecke mit der stärksten Leistung ist, $SF$ der Spreizfaktor des Pilotsignals ist, welches an dem Spreizspektrumempfänger (10) empfangen wird und $\hat{P}$ die Summe der Leistung der Kanalschätzwerte ist.

6. Verfahren zum Bestimmen der Filterkoeffizienten zur Verwendung in einem Chip-Entzerrer-FIR (Finite Impulse Response) - Filter, das einen Spreizspektrumempfänger (10) bildet, wobei das Verfahren **dadurch gekennzeichnet ist, dass** es aufweist:

Berechnen (54) des Parameters, der für das Kanalrauschen repräsentativ ist, unter Verwendung des Verfahrens nach einem der Ansprüche 1 bis 5;
Aufbauen einer Matrix G gemäß der Gleichung (4):

$$G = H^H H + \beta I \qquad (4)$$

wobei $H^H H$ eine Kanalkorrelationsmatrix ist, $I$ die Einheitsmatrix und $\beta$ ein Skalarparameter ist, der das Kanalrauschen repräsentiert; und
Berechnen (46) der Filterkoeffizienten basierend auf der Matrix G.

7. Chip-Entzerrer zur Verwendung in einem Spreizspektrumempfänger (10), mit einem oder mehreren Rechenblöcken zur Implementierung eines Verfahrens nach einem der Ansprüche 1 bis 5.

**Revendications**

1. Procédé de calcul (54) d'un paramètre représentatif d'un bruit de canal dans des algorithmes d'égalisation destinés à servir dans un égaliseur chip composant un récepteur à spectre étalé (10), le procédé comprenant les étapes consistant à :

calculer (42) des estimations de canal et de variance de bruit pour de multiples chemins d'évanouissement résolvables de signaux chip reçus au niveau dudit récepteur à spectre étalé (10) ;
calculer (50) une somme de la puissance des estimations de canal ;
estimer (52) une énergie chip des signaux chip ; et
calculer (54) le paramètre représentatif du bruit de canal à partir de l'estimation de l'énergie chip, des estimations de canal et de variance de bruit, de la somme de la puissance des estimations de canal et d'un facteur d'étalement d'un signal pilote,

**caractérisé en ce que** l'étape de calcul (54) du paramètre représentatif du bruit de canal est réalisée en sélectionnant les estimations de canal et de variance de bruit à partir du chemin d'évanouissement ayant la plus grande puissance.

2. Procédé selon la revendication 1, dans lequel l'étape de calcul (42) des estimations de canal et de variance de bruit est réalisée en utilisant un signal pilote désétalé correspondant à chaque chemin d'évanouissement.

3. Procédé selon la revendication 1, dans lequel l'étape de calcul (50) de la somme $\hat{P}$ de la puissance des estimations de canal est réalisée selon l'expression (1) :

$$\hat{P} = \sum_{l=1}^{L} \left| \hat{h}_l \right|^2 \qquad (1)$$

où $\hat{h}_l$ est l'estimation de canal du $l^{\text{ième}}$ chemin d'évanouissement.

4. Procédé selon la revendication 1, dans lequel l'étape de sélection des estimations de canal $\hat{h}_m$ et de variance de bruit $\sigma_m^2$ à partir du chemin d'évanouissement ayant la plus grande puissance est réalisée selon l'expression (2) :

$$m = \arg\left[ \max\left\{ \left| \hat{h}_l \right|^2 \right\} \right] \qquad (2)$$

où $m$ est un indice du chemin d'évanouissement ayant la plus grande puissance et $\hat{h}_l$ est l'estimation de canal du $l^{\text{ième}}$ chemin d'évanouissement.

5. Procédé selon la revendication 4, dans lequel l'étape de calcul (54) du paramètre β représentatif du bruit de canal est réalisée selon l'expression (3) :

$$\beta = \frac{\hat{E}_c \left| \hat{h}_m \right|^2}{\hat{E}_c - SF\sigma_m^2} - \hat{P} \qquad (3)$$

où $\hat{E}_c$ est l'énergie chip estimée des signaux chip, $\hat{h}_m$ est l'estimation de canal du chemin d'évanouissement ayant la plus forte puissance,

$\sigma_m^2$ est l'estimation de variance de bruit du chemin d'évanouissement ayant la plus forte puissance, SF est le facteur d'étalement du signal pilote reçu au niveau dudit récepteur à spectre étalé (10) et $\hat{P}$ est la somme de la puissance des estimations de canal.

6. Procédé de détermination de coefficients de filtrage destinés à servir dans un filtre FIR (à réponse impulsionnelle finie) d'égaliseur chip composant un récepteur à spectre étalé (10), le procédé étant **caractérisé en ce qu'**il comprend les étapes consistant à :

   calculer (54) le paramètre représentatif du bruit de canal en utilisant le procédé selon l'une quelconque des revendications 1 à 5 ;
   construire une matrice G selon l'expression (4) :

$$G = H^H H + \beta I \qquad (4)$$

   où $H^H H$ est une matrice de corrélation de canal, I est la matrice identité et β est un paramètre scalaire représentatif du bruit de canal ; et
   calculer (46) les coefficients de filtrage sur la base de la matrice G.

7. Egaliseur chip destiné à servir dans un récepteur à spectre étalé (10), comprenant un ou plusieurs blocs de calcul permettant de mettre en oeuvre un procédé selon l'une quelconque des revendications 1 à 5.

## FIG.1

## FIG.2